# EUROPEAN PATENT SPECIFICATION

(11) **EP 1 752 406 B1**
(45) Date of publication and mention of the grant of the patent: **28.10.2009**
(21) Application number: 06253504.2
(22) Date of filing: 04.07.2006
(51) Int. Cl.: B65H 31/30, B65G 57/03

(54) **Booklet stacking apparatus**
Stapelvorrichtung für Hefte und Broschüren
Dispositif d'empilage des livrets, des brochures et des cahiers

(30) Priority: 11.08.2005 JP 2005232905
(43) Date of publication of application: 14.02.2007
(73) Proprietor: KONICA MINOLTA BUSINESS TECHNOLOGIES, INC., Tokyo 100-0005 (JP)
(72) Inventor: Yoshie, Kohji, Konica Minolta Technologies, Inc., Hachioji-shi Tokyo 192-8505 (JP); Shimizu, Saburo, Konica Minolta Technologies, Inc., Hachioji-shi Tokyo 192-8505 (JP); Hama, Riichi, Konica Minolta Technologies, Inc., Hachioji-shi Tokyo 192-8505 (JP); Kaneko, Masahiro, Konica Minolta Technologies Inc., Hachioji-shi Tokyo 192-8505 (JP); Hata, Kiyoshi, Konica Minolta Technologies, Inc., Hachioji-shi Tokyo 192-8505 (JP)
(74) Representative: Alton, Andrew

(56) References cited:
- DE-A1- 3 107 495
- FR-A- 1 588 621
- JP-A- 60 002 527

## Description

### BACKGROUND OF THE INVENTION

The present invention relates to a booklet stacking apparatus for receiving and stacking the booklets bound by a booklet binding apparatus and others.

Because of the advantages of meeting the requirements for small lot production, shorter delivery time and reduced costs, an image forming apparatus based on color electrophotographic technology has come into use in recent years to take the place of the conventional printing apparatus. This is accompanied by the recent use of a booklet binding apparatus for producing a booklet, wherein a predetermined number of the sheets with an image formed thereon by an image forming apparatus are aligned to form a bundle of sheets and a paste is applied to the back of the bundle of sheets so that a cover sheet is bonded thereon.

Such a booklet binding apparatus requires a stacking apparatus for stacking a bound booklet. The stacking apparatus of this type known so far is exemplified by a conveyor type stacking apparatus wherein booklets are stacked one after another on a conveyor. For a pasting and binding apparatus, a stacking apparatus (stacking device) is known wherein the bound booklets are stacked directly on a stacking section (e.g. Patent Document 1).
[Patent Document 1] Unexamined Japanese Patent Application Publication No. 2004-209870

One known booklet stacking apparatus is disclosed in DE3107495Al. This discloses a booklet stacking apparatus comprising a booklet receiving device for receiving a booklet bound by booklet binding apparatus at a receiving position. The booklet receiving device includes a receiving mechanism for transporting a booklet at a receiving position to a predetermined position and a delivery mechanism for transporting a booklet from the predetermined position downward for passing to a booklet stacking device. The booklet stacking device is able to stack a plurality of booklets received from the booklet receiving device and includes a booklet transporting mechanism.

### SUMMARY

The following describes the structures of the present invention:
(1) A booklet stacking apparatus comprising:
   a booklet receiving device for receiving a booklet bound by a booklet binding apparatus in a booklet receiving position;
   a booklet stacking device which is capable of stacking a plurality of booklets received by the booklet receiving device and includes a transporting mechanism capable of transporting the booklet; and
   a driving mechanism for driving a booklet conveyance device for receiving the booklet stacked on the booklet stacking device from the transporting mechanism, when a movable cart which can be attached to and detached from the booklet stacking apparatus and includes the booklet conveyance device, is attached to the booklet stacking apparatus,
(2) A booklet stacking apparatus comprising:
   a booklet stacking apparatus body including:
      a booklet receiving device for receiving a booklet bound by a booklet binding apparatus in a booklet receiving position; a booklet stacking device which is capable of stacking a plurality of booklets received by the booklet receiving device and has a transporting mechanism capable of transporting the booklet; and a driving mechanism,
   wherein the booklet receiving device has:
   a receiving mechanism for transporting the booklet received in the booklet receiving position to a predetermined position; and
      a delivery mechanism for transporting the booklet having been transported to the predetermined position, downward from the predetermined position, for handing the booklet over to the booklet stacking device, and for returning to the predetermined position, the booklet stacking apparatus further comprising,
      a movable cart which can be attached to and detached from the booklet stacking apparatus body, and which includes a booklet conveyance device for receiving the booklet stacked on the booklet stacking device from the transporting mechanism, wherein the booklet conveyance device is driven by the driving mechanism.

### (1)BRIEF DESCRIPTION OF THE DRAWINGS

Fig. 1 is a front view of a booklet stacking apparatus 100.
Fig. 2 is a side view of the booklet stacking apparatus 100.
Fig. 3 is a perspective view showing a part of the booklet stacking apparatus 100.
Fig. 4 is a plan view showing the connection between the booklet stacking apparatus body 100E and movable cart 100C as viewed from the direction marked with arrow "X".
Fig. 5 is a side view of Fig. 4.
Fig. 6 is a view of Fig. 5 as observed from the direction "Y".
Fig. 7 is a block diagram showing the control structure of the booklet stacking apparatus 100.

### DETAILED DESCRIPTION OF THE PREFERRED EMBODIMENT

The booklet in the present invention refers to a plurality of sheets with predetermined peripheries (end faces) having been aligned, or these sheets and a cover sheet having been bound together in the form of a book, for example, by wrapping-binding or stapling.

A booklet binding apparatus based on the wrapping-binding method is disclosed, for example, in the Unexamined Japanese Patent Application Publication No. 2004-209870, while a booklet binding apparatus based on the stapling method is introduced, for example, in the Unexamined Japanese Patent Application Publication No. 2001-151407.

With reference to drawings, the following describes the stacking apparatus for booklets produced by the aforementioned apparatus:

It should be made clear that the following description does not impose restrictions on the technical scope or terminology of what is claimed. The assertive description in the embodiment of the present invention indicates the best mode, without the terminology or technical scope of the present invention being restricted thereby.

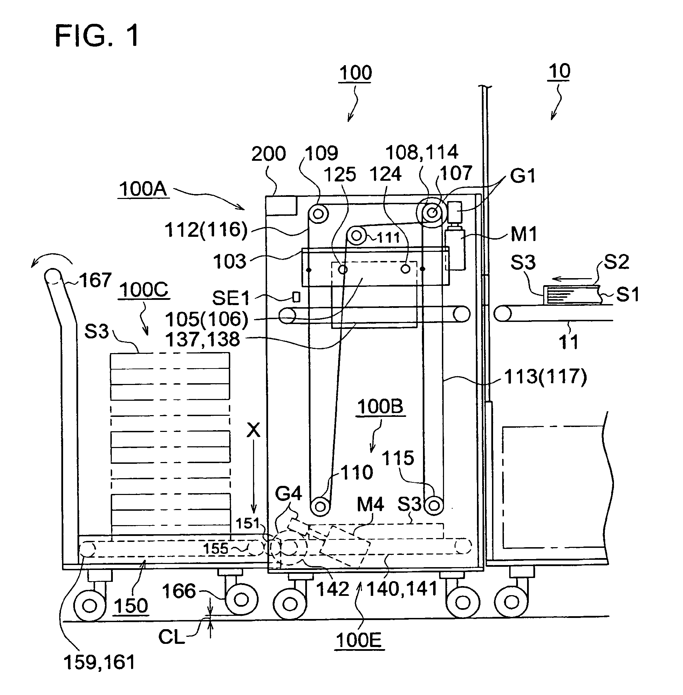

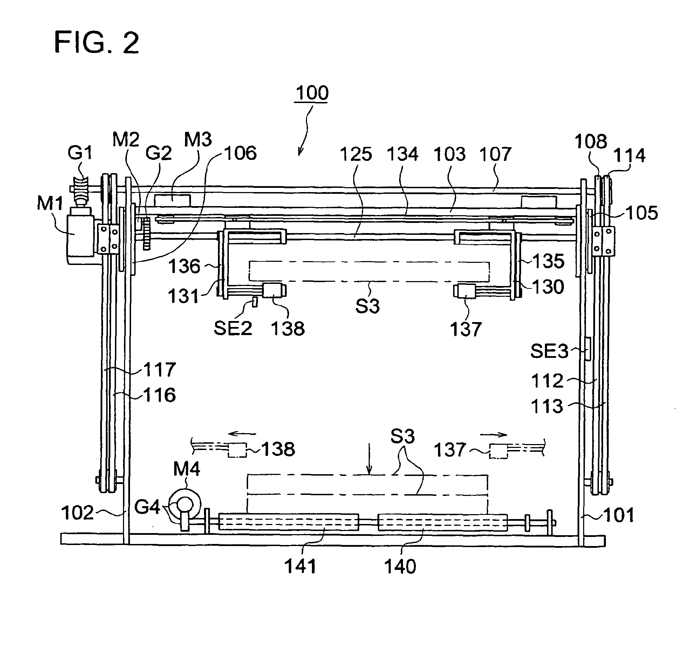

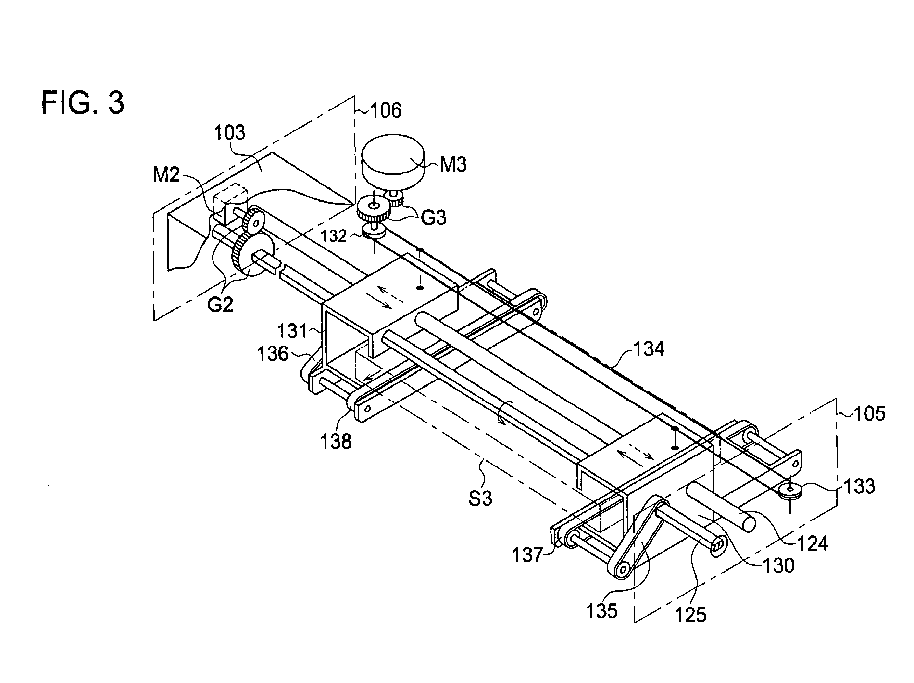

Fig. 1 is a front view of a booklet stacking apparatus 100, Fig. 2 is a side view of the booklet stacking apparatus 100 and Fig. 3 is a perspective view showing a part of the booklet stacking apparatus 100.

As shown in Fig. 1, the booklet stacking apparatus 100 includes a booklet receiving device 100A for receiving booklets S3 formed of a bundle of sheets S1 and a cover sheet S2 ejected from the booklet conveyor 11 of the booklet binding apparatus 10, for example, based on the wrapping-binding method, and a booklet stacking device 100B, arranged downward in the vertical direction to the booklet receiving device 100A, capable of sequentially stacking the booklets S3 having been transported from the booklet receiving device 100A. The movable cart 100C capable of transporting the booklets S3 loaded from the booklet stacking device 100B can be attached to or detached from this booklet stacking apparatus 100.

The following describes the structure of the booklet receiving device 100A and the booklet stacking device 100B of the booklet stacking apparatus 100.

As shown in Figs. 1 and 2, the booklet stacking apparatus 100 is provided with side plates 101 and 102 which are fixed on respective sides. These side plates 101 and 102 are provided with movable plates 105 and 106 which can be moved in the vertical direction. The movable plates 105 and 106 are connected with a connection plate 103 to maintain the same height in Fig. 1.

An elevation drive shaft 107 is rotatably mounted through the side plates 101 and 102 and the elevation drive shaft 107 is driven by a motor M1 for elevation through the gear train G1.

As shown in Fig. 1, a pulley 108 is fixed to one end of the elevation drive shaft 107. Pulleys 109, 110 and 111 are rotatably fixed to the side plate 101 and an elevation belt 112 is wound around these pulleys 108, 109, 110 and 111. An elevation belt 113 is wound around a pulley 114 fixed to the elevation drive shaft 107 and a pulley 115 provided rotatably on the side plate 101.

Similarly, the elevation belts 116 and 117 are applied also on the side of the side plate 102.

The movable plate 105 is connected to the elevation belts 112 and 113 at the same height whereby they can move in the same vertical direction in Fig. 1. Similarly, the movable plate 106 is fixed to the elevation belts 116 and 117 at the aforementioned same height whereby they can move in the same vertical direction in Fig. 1. The aforementioned arrangement allows the movable plates 105 and 106 to be moved as an integrated member in the vertical direction, when the motor M1 for elevation makes a forward or reverse rotation.

As shown in Fig. 3, both ends of the guide bar 124 are fixed to the movable plates 105 and 106. Further, the rotary shaft 125 having a rectangular cross-section is rotatably supported thereby.

As shown in Fig. 3, the rotary shaft 125 is driven by a motor M2 for reception fixed to the movable plate 106 through the gear train G2.

As shown in Figs. 2 and 3, the guide bar 124 and rotary shaft 125 are provided with two booklet receiving frames 130 and 131 having an approximately symmetrical form in such a way that they can be moved freely in the horizontal direction in Fig. 2.

As shown in Fig. 3, the booklet receiving frames 130 and 131 are connected to two positions movable in the directions mutually opposite on the wire 134 wound around pulleys 132 and 133 which are arranged rotatably on the connection plate 103. This structure ensures that they are separated from each other or come closer to each other. The pulley 132 is driven by the motor M3 for detachment through the gear train G3.

As shown in Figs. 2 and 3, the drive belts 135 and 136 are arranged outside the booklet receiving frames 130 and 131. They are driven by the rotary shaft 125.

Further, the receiving belts 137 and 138 are arranged inside the booklet receiving frames 130 and 131 to receive the booklet S3 ejected from the booklet conveyor 11 (Fig. 1) of the booklet binding apparatus 10 and to transport it to a predetermined position and then to hold it therein. The receiving belts 137 and 138 are rotated by the drive belts 135 and 136.

A first sensor SE1 (Fig. 1) is arranged to detect the leading edge of a booklet S3 is provided on the downstream side of the receiving belts 137 and 138 in the booklet conveying direction to ensure that the booklet S3 stops when having been transported to the aforementioned predetermined position.

As described above, the booklet receiving device 100A for receiving the booklet S3 produced by the booklet binding apparatus 10 includes the booklet receiving frames 130 and 131, receiving belts 137 and 138, the motor M2 for reception, the motor M3 for detachment, movable plates 105 and 106, the motor M1 for elevation and others.

A booklet stacking device 100B capable of stacking the booklet S3 is arranged in the vertical direction below the aforementioned predetermined position of this booklet receiving device 100A.

To be more specific, in a booklet receiving device 100A, the receiving mechanism for receiving the booklet S3 ejected from the booklet binding apparatus 10 and transporting it to a predetermined position is provided with a motor M2 for reception, drive belts 135 and 136, receiving belts 137 and 138, the first sensor SE1 and others. The delivery mechanism is provided the motor M1 for elevation, elevation belts 112, 113, 116 and 117, the motor M3 for detachment, guide bar 124, wire 134 and others, wherein the delivery mechanism transports the booklet S3 having been transported to the aforementioned predetermined position, downward in the vertical direction, and hands the booklet S3 over to the booklet stacking device 100B arranged downward of the aforementioned predetermined position in the vertical direction and it goes back to the predetermined position.

Referring to Figs. 1 and 2, the following describes the booklet stacking device 100B.

The booklet stacking device 100B includes the ejection belts 140 and 141, a motor M4 for ejection for driving and the ejection belts 140 and 141, the gear train G4 for transmitting the drive force of the motor M4 for ejection to the ejection belts 140 and 141, the support member (without reference numeral) for supporting these, and others.

The booklet stacking device 100B has a booklet ejection device (transporting mechanism) 100D. The booklet ejection device 100D includes the motor M4 for ejection, ejection belts 140 and 141, and others.

The following describes the movable cart 100C for receiving the booklets S3 stacked on the booklet stacking device 100B:
Fig. 1 shows the movable cart 100C mounted on the booklet stacking apparatus body 100E of the booklet stacking apparatus 100.

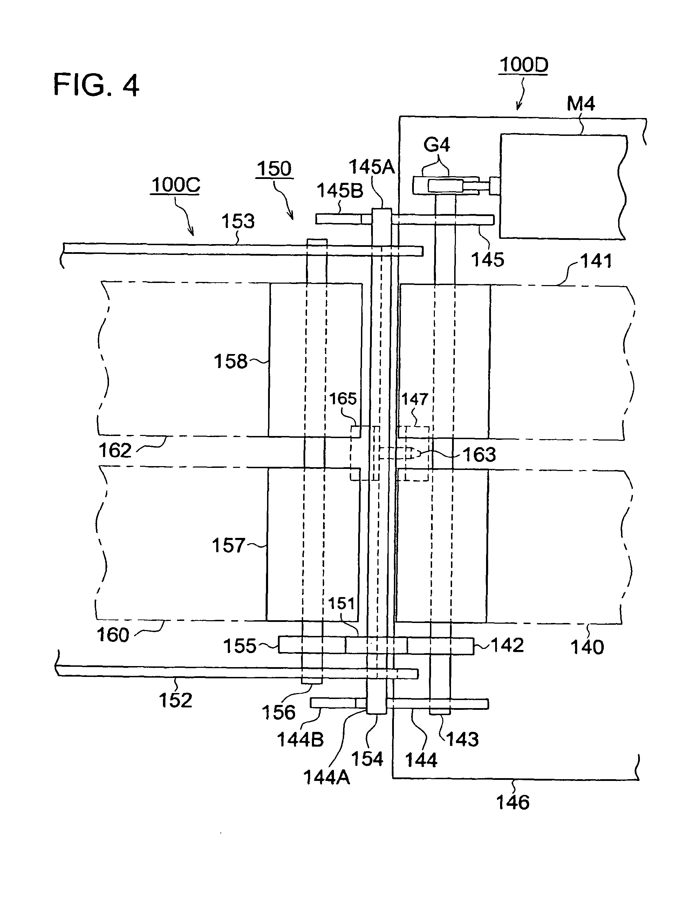

The movable cart 100C has a conveyor 150 as a booklet conveyance device. The conveyance belts 160 and 162 (Fig. 4) constituting the conveyor 150 forms a surface of conveyance at almost the same height as the ejection belts 140 and 141.

The conveyor 150 is driven by the power for driving the booklet stacking apparatus 100. The details are described with reference to Figs. 4, 5 and 6.

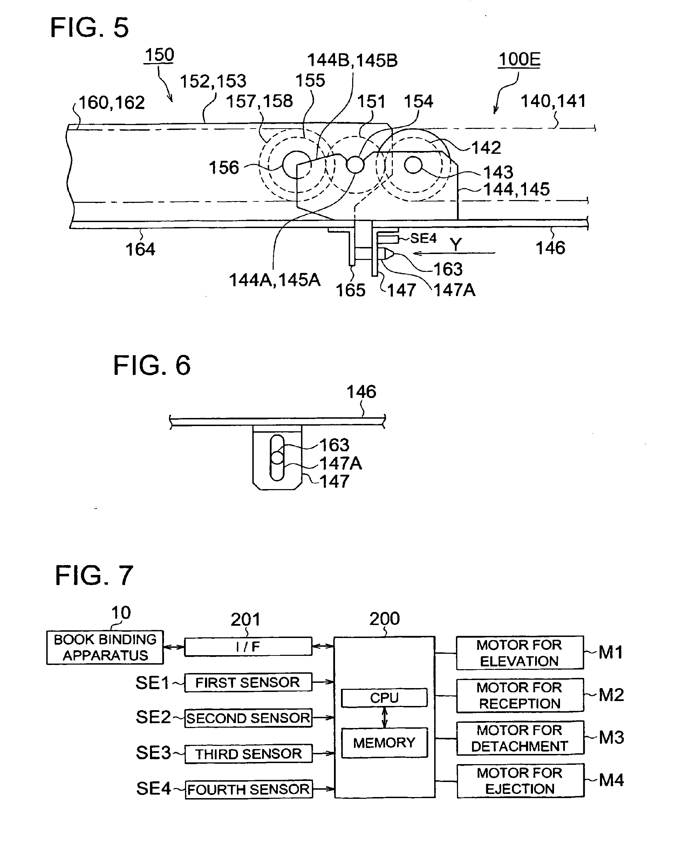

Fig. 4 is a plan view showing the connection between the booklet stacking apparatus body 100E and movable cart 100C as viewed from the direction marked with arrow "X". Fig. 5 is a side view of Fig. 4. Fig. 6 is a view of Fig. 5 as observed from the direction "Y".

The reference numeral 151 denotes the first gear, which is rotatably held by the first gear support shaft 154 supported by the movable cart side plates 152 and 153 of the movable cart 100C.

The reference numeral 155 denotes the second gear. The second gear is fixed to the conveyor drive shaft 156 rotatably held by the movable cart side plates 152 and 153, and is also meshed with the first gear 151.

The conveyor drive shaft 156 is connected with the pulleys 157 and 158, and the pulley 157 and pulley 159 (Fig. 1) are wound with the conveyance belt 160, while the pulley 158 and pulley 161 (Fig. 1) are wound with the conveyance belt 162.

The reference numeral 142 denotes a drive transmission gear. It is secured to the ejection belt drive shaft 143, and meshes with the first gear 151 when the movable cart 100C is connected with the booklet stacking apparatus body 100E.

The ejection belt drive shaft 143 is driven by the motor M4 for ejection through the aforementioned gear train G4.

As described above, the driving mechanism for driving the conveyor 150 of the movable cart 100C includes the motor M4 for ejection, gear train G4, ejection belt drive shaft 143, drive transmission gear 142, and others.

The reference numerals 144 and 145 denotes the drive shaft support plates fixed to the bottom plate 146 of the booklet stacking apparatus body 100E to rotatably support both ends of the ejection belt drive shaft 143, whereby the U-shaped grooves 144A and 145A and the tapered portions 144B and 145B for supporting the first gear support shaft 154 are formed, as shown in Fig. 5.

The U-shaped grooves 144A and 145A is formed where the first gear 151 meshes with the drive transmission gear 142 when both ends of the first gear support shaft 154 are engaged into the U-shaped grooves 144A and 145A.

The tapered portions 144B and 145B are provided to ensure that the movable cart 100C can be smoothly connected with the booklet stacking apparatus body 100E, and are located on the movable cart 100C side of the U-shaped grooves 144A and 145A.

As shown in Fig. 5, the reference numeral 147 denotes a regulation plate provided upright on the tip of the bottom plate 146 to provide control in such a way that the first gear 151 meshes with the drive transmission gear 142 at a predetermined position when the movable cart 100C is connected to the booklet stacking apparatus body 100E. A slot section 147A is formed as shown in Fig. 6.

In the similar manner, the reference numeral 163 in Fig. 5 denotes a control pin fitted with the slot section 147A of the regulation plate 147. It is fixed to the control pin support plate 165 provided upright at the tip of the movable cart bottom plate 164 of the movable cart 100C.

The reference numeral SE4 indicates the fourth sensor. It checks whether or not the movable cart 100C is mounted on the booklet stacking apparatus body 100E.

The following describes the procedure of mounting and dismounting the movable cart 100C of the aforementioned structure:

The operator advances the movable cart 100C to ensure that the control pin 163 will fit into the slot section 147A of the regulation plate 147. When the movable cart 100C comes closer to the booklet stacking apparatus body 100E, the control pin 163 fits into the slot section 147A of the regulation plate 147. Further, the first gear support shaft 154 of the movable cart 100C advances while coming into contact with the tapered portions 144B and 145B of the drive shaft support plates 144 and 145, and is engaged into the U-shaped grooves 144A and 145A of the drive shaft support plates 144 and 145. As a result, the first gear 151 meshes the drive transmission gear 142 so as to transmit the driving force of the motor M4 for ejection.

When the first gear support shaft 154 engages in the U-shaped grooves 144A and 145A of the drive shaft support plates 144 and 145, the first gear 151 rotates in the process of being engaged, even if the tooth top faces of the first gear 151 and drive transmission gear 142 come in contact with each other. This is because there is no braking device such as a reduction gear on the side of the movable cart 100C. Thus, the first gear 151 and drive transmission gear 142 mesh smoothly with each other.

When the first gear support shaft 154 engages in the U-shaped grooves 144A and 145A of the drive shaft support plates 144 and 145, a slight clearance CL is formed between the wheel 166 of the movable cart 100C and the floor, as shown in Fig. 1. This arrangement ensures a more certain connection between the movable cart 100C and booklet stacking apparatus body 100E.

When the movable cart 100C is removed upon completion of the loading of the booklet, the handle 167 of the movable cart 100C is turned in the direction marked by arrow of Fig. 1, and the first gear support shaft 154 is pulled out of the U-shaped grooves 144A and 145A of the drive shaft support plates 144 and 145. This procedure will ensure easy removal of the movable cart 100C.

Referring to Fig. 7, the following describes the controlling structure of the booklet stacking apparatus 100 of the aforementioned structure.

The reference numeral 200 denotes the control device of the booklet stacking apparatus 100. It includes a storage device for storing the control procedure of the booklet stacking apparatus 100 and various forms of data, and a CPU for executing the control based on the control procedure and data stored in the storage device.

The control device 200 is capable of communicating with the booklet binding apparatus 10 of the superior position through the interface 201 so that information of size and others is transmitted. The first sensor SE1, the second sensor SE2, the third sensor SE3, the fourth sensor SE4 and others are connected to the input side of the control device 200. The motor M1 for elevation, the motor M2 for reception, the motor M3 for detachment, the motor M4 for ejection and others are connected to the output side.

The following describes the functions of the booklet stacking apparatus 100 of the aforementioned structure.

As shown in Fig. 1, to ensure smooth reception of the booklet S3 ejected from the booklet binding apparatus 10, the receiving belts 137 and 138 are waiting at the booklet receiving position preset to a width capable of holding the booklet S3 wherein this booklet receiving position is located at almost the same height as the booklet conveyor 11 of the booklet binding apparatus 10.

Concurrently as the booklet S3 is ejected by the booklet conveyor 11 of the booklet binding apparatus 10, the motor M2 for reception starts rotation so that the rotary shaft 125 rotates. The motor M2 reception further rotates the receiving belts 137 and 138 in the direction marked by arrow in Fig. 3 through the drive belts 135 and 136, and the booklet S3 is received at the aforementioned receiving position. The received booklet S3 travels from the aforementioned receiving position to the position (a predetermined position) to stop traveling where the leading edge of the booklet S3 is detected by the first sensor SE1 (Fig. 1).

When the booklet S3 has stopped traveling, the motor M1 for elevation starts the operation and the elevation belts 112, 113, 116 and 117 rotate to cause the movable plates 105 and 106 to move downward. This downward movement allows the booklet S3 on the receiving belts 137 and 138 to move down just above the ejection belts 140 and 141. When the second sensor SE2 (Fig. 2) provided on the booklet receiving frame 130 has detected the upper surface of the ejection belts 140 and 141, booklet S3 stops. When another booklet S3 has been placed on the ejection belts 140 and 141, the downward movement of the movable plates 105 and 106 stops if the second sensor SE2 has detected the upper surface of the booklet S3 on the ejection belts 140 and 141.

When the downward movement of the booklets S3 have stopped, the motor M3 for detachment starts the operation, and the booklet receiving frames 130 and 131 are separated through a wire 134. The booklets S3 on the receiving belts 137 and 138 are dropped toward the ejection belts 140 and 141 so that they are stacked one on top of another.

After the booklets S3 has dropped from the receiving belts 137 and 138, the motor M1 for elevation makes a reverse rotation, and the receiving belts 137 and 138 are set back to the initial height. After that, the motor M3 for detachment is turned in the reverse direction and the receiving belts 137 and 138 are reset to the initial position where the booklets S3 can be received from the booklet binding apparatus 10. Thus, preparation has been made to cope with subsequent ejection of the booklets S3 from the booklet binding apparatus 10.

When the aforementioned operation is repeated, booklets S3 are sequentially stacked on the ejection belts 140 and 141. If the end portion of the topmost surface of the booklet S3 has been detected by the third sensor SE3 that specifies the upper limit of the stack, the motor M4 for ejection starts rotation for a predetermined time to rotate the ejection belts 140 and 141. At the same time, the rotation of the motor M4 for ejection is transmitted to the drive transmission gear 142, the first gear 151 and the second gear 155. The conveyance belts 160 and 162 of the movable cart 100C connected to the booklet stacking apparatus body 100E in advance also starts rotation for a predetermined time. The booklets S3 stacked on the ejection belts 140 and 141 are fed to the position over the movable cart 100C shown in Fig. 1.

The time interval from the moment when the booklet receiving device 100A starts to receive the booklets S3 ejected sequentially from the booklet binding apparatus 10, to the moment when it returns to the aforementioned predetermined position after feeding the booklets S3 to the booklet stacking device 100B, is shorter than the time interval in which the booklets S3 are sequentially ejected from the booklet binding apparatus 10. This control is provided by the control device 200.

The control device 200 also provides control in such a way that the time required for the booklets S3 to be handed over to the movable cart 100C from the ejection belts 140 and 141 is shorter than the time for which the booklet receiving device 100A waits to receive the booklets S3 from the booklet binding apparatus 10.

The movable cart 100C having received the booklet S3 is removed by the operator, and the empty movable cart 100C is again mounted on the booklet stacking apparatus body 100E.

If the movable cart 100C has not been mounted on the booklet stacking apparatus body 100E when the booklets S3 stacked on the ejection belts 140 and 141 was detected by the third sensor SE3, namely, if the fourth sensor SE4 is not ON, the booklet stacking apparatus 100 and booklet binding apparatus 10 need to be stopped. To avoid this, an arrangement can also be used so that a sensor is provided below the third sensor SE3, and an alarm is issued to notify the operator, if the movable cart 100C has not been mounted when this sensor detects to the top surface of the booklet S3.

In the present embodiment, the movable cart 100C is mounted or dismounted from the left side in Fig. 1. Without being restricted to this arrangement, it is also possible to arrange such a configuration that the movable cart 100C is mounted or dismounted from the position vertical to the sheet surface on which Fig. 1 is illustrated, namely, from the operator side of the booklet binding apparatus. This arrangement will provide a further a space saving effect.

Apart from the present embodiment, the booklet stacking apparatus 100 can be made up of the booklet stacking apparatus body, which includes the booklet receiving device 100A and the booklet stacking device 100B, and the movable cart 100C which can be mounted or dismounted from this booklet stacking apparatus body.

As described above, the aforementioned embodiment provides the following advantages:
- Use of a movable cart ensures easy transporting to the next process, and enhances the work efficiency. Space saving is provided by the movable cart, because the cart can be mounted or dismounted.
- The booklet conveyance device of the movable cart for carrying the booklets is driven by the power transmitted from the booklet stacking apparatus. This arrangement eliminates the need of using a drive source for the movable cart, and also eliminates the complicated work of preparing a separate drive source and connecting it.
- The booklet stacking device is located in the vertical direction below the aforementioned predetermined position. This arrangement permits downsizing of the booklet stacking apparatus and ensures an effective use of space.
- The booklet receiving device receives the booklet from the booklet binding apparatus and carries it to a predetermined position. The received booklet is fed downward in the vertical direction and is dropped to the booklet stacking device located in the vertical direction below the aforementioned predetermined position so that the booklets will be stacked one on top of another. This arrangement ensures certain booklet stacking, and avoids the risk of causing a trouble such that the sheet or cover sheet constituting the booklet is folded at the time of stacking.
- A control is provided in such a way that the time interval from the moment when the booklet receiving device starts to receive the booklets from the booklet binding apparatus, to the moment when it returns to the aforementioned predetermined position after feeding the booklets to a predetermined position, going downward, handing them over the booklet stacking device and going upward, is shorter than the time interval at which the booklets are sequentially ejected from the booklet binding apparatus. This arrangement eliminates the need of suspending the booklet binding apparatus of the previous process or the image forming apparatus connected before it, and hence improves the productivity.
- While the booklet receiving device is kept in the standby mode, the booklets stacked on the booklet stacking device can be transported into the movable cart. This arrangement eliminates the need of suspending the booklet binding apparatus of the previous process or the image forming apparatus connected before it, and hence improves the productivity.

## Claims

1. A booklet stacking apparatus (100) comprising:
a booklet receiving device (100A) for receiving a booklet (S3) bound by a booklet binding apparatus (10) in a booklet receiving position;
a booklet stacking device (100B) which is capable of stacking a plurality of booklets (S3) received by the booklet receiving device (100A) and includes a transporting mechanism (140, 141) capable of transporting the booklet (S3) ;
wherein the booklet receiving device (100A)includes, a receiving mechanism (130, 131, 137, 138) for transporting the booklet (S3) received in the booklet receiving position to a predetermined position; and
a delivery mechanism (112, 113, 116, 117,) for transporting the booklet (S3) having been transported to the predetermined position, downward from the predetermined position, for handing the booklet over to the booklet stacking device (100B), and for returning to the predetermined position, and **characterised by** further comprising:
a driving mechanism (M4, G4, 142, 143) for driving a booklet conveyance device (150) for receiving the booklet (S3) stacked on the booklet stacking device (100B) from the transporting mechanism (140,141), when a movable cart (100C) which can be attached to and detached from the booklet stacking apparatus (100) and includes the booklet conveyance device (150), is attached to the booklet stacking apparatus (100).

2. The booklet stacking apparatus (100) of claim 1, further comprising:
a control device (200) for controlling the booklet receiving device (100A) such that time from when the receiving mechanism (130, 131, 137, 138) starts to receive a booklet till when the delivery mechanism (112, 113, 116, 117) returns to the predetermined position is shorter than a predetermined time interval between each consecutive booklet ejection from the booklet binding apparatus (10), and for controlling the booklet stacking device (100B) and the driving mechanism (M4, G4, 142, 143) such that time from when the transporting mechanism (140, 141) starts transportation of a booklet (S3) stacked on the booklet stacking device (100B) to the movable cart (100C) till when the transporting mechanism (140, 141)completes the transportation is shorter than time for which the delivery mechanism (112, 113, 116, 117) is standing by in the predetermined position.

3. The booklet stacking apparatus (100) of claim 1,
wherein the driving mechanism (M4, G4, 142, 143) comprises a mechanism (M4, G4) for driving the transporting mechanism (140, 141).

4. A booklet stacking apparatus (100) comprising:
a booklet stacking apparatus body including:
a booklet receiving device (100A) for receiving a booklet (S3) bound by a booklet binding apparatus (10) in a booklet receiving position;
a booklet stacking device (100) which is capable of stacking a plurality of booklets (S3) received by the booklet receiving device (100A) and has a transporting mechanism (140, 141) capable of transporting the booklet (S3);
wherein the booklet receiving device has:
a receiving mechanism (130, 131, 137, 138) for transporting the booklet (S3) received in the booklet receiving
position to a predetermined position; and a delivery mechanism (112, 113, 116, 117) for transporting the booklet (S3) having been transported to the predetermined position, downward from the predetermined position, for handing the booklet (S3) over to the booklet stacking device (100B), and
for returning to the predetermined position,the booklet stacking apparatus (100) being **characterised by** further comprising:
a driving mechanism (M4, G4, 142, 143);
a movable cart (100C) which can be attached to and detached from the booklet stacking apparatus body, and which includes a booklet conveyance device (150) for receiving the booklet (S3) stacked on the booklet stacking device (100B) from the transporting mechanism (140, 141),
wherein the booklet conveyance device (150) is driven by the driving mechanism (M4, G4, 142, 143).

5. The booklet stacking apparatus (100) of claim 4, further comprising:
a control device (200) for controlling the booklet receiving device (100A) such that time from when the receiving mechanism (130, 131, 137, 138) starts to receive a booklet (S3) till when the delivery mechanism (112, 113, 116, 117) returns to the predetermined position is shorter than a predetermined time interval between each consecutive booklet ejection from the booklet binding apparatus (10), and for controlling the booklet stacking device (100B) and the driving mechanism (M4, G4, 142, 143) such that time from when the transporting mechanism (140, 141)starts transportation of a booklet (S3) stacked on the booklet stacking device (100B) to the movable cart (100C) till when the transporting mechanism (140, 141) completes the transportation is shorter than time for which the delivery mechanism (112, 113, 116, 117) is standing by in the predetermined position.

6. The booklet stacking apparatus (100) of claim 4,
wherein the driving mechanism (M4, G4, 142, 143) comprises a mechanism (M4, G4) for driving the transporting mechanism (140, 141).

## Patentansprüche

1. Eine Stapelvorrichtung für Hefte und Broschüren (Booklets) (100) mit:
einer Booklet-Aufnahmeeinrichtung (100A) zum Aufnehmen eines Booklets (S3), das durch eine Booklet-Bindevorrichtung (10) gebunden ist, in einer Booklet-Aufnahmeposition,
einer Booklet-Stapeleinrichtung (100B), die mehrere Booklets (S3), welche von der Booklet-Aufnahmeeinrichtung (100A) empfangen wurden, stapeln kann und einen Transportmechanismus (140,141) aufweist, der das Booklet (S3) transportieren kann,
wobei die Booklet-Aufnahmeeinrichtung (100A) aufweist:
einen Aufnahmemechanismus (130,131,137,138) zum Transportieren des Booklets (S3), das in der Booklet-Aufnahmeposition aufgenommen wurde, zu einer vorbestimmten Position, und
einen Liefermechanismus (112,113,116,117) zum Transportieren des Booklets (S3), welches zu der vorbestimmten Position transportiert worden ist, nach unten von der vorbestimmten Position, um das Booklet an die Booklet-Stapeleinrichtung (100B) zu übergeben, und zum Zurückkehren zu der vorbestimmten Position, und der **dadurch gekennzeichnet, dass** er ferner umfasst:
einen Antriebsmechanismus (M4,G4,142,143) zum Antreiben einer Booklet-Fördereinrichtung (150) zum Aufnehmen des auf der Booklet-Stapeleinrichtung (100B) gestapelten Booklets (S3) von dem Transportmechanismus (140,141), wenn ein beweglicher Wagen (100C), der an der Booklet-Stapelvorrichtung (100) angebracht und von dieser gelöst werden kann und die Booklet-Fördereinrichtung (150) umfasst, an der Booklet-Stapelvorrichtung (100) angebracht ist.

2. Die Booklet-Stapelvorrichtung (100) gemäß Anspruch 1, ferner mit:
einer Steuereinrichtung (200) zum Steuern der Booklet-Aufnahmeeinrichtung (100A), derart, dass die Zeit, von dem Zeitpunkt, wenn der Aufnahmemechanismus (130,131,137,138) beginnt, ein Booklet aufzunehmen, bis zu dem Zeitpunkt, wenn der Fördermechanismus (112,113,116,117) zu der vorbestimmten Position zurückkehrt, kürzer ist als ein vorbestimmtes Zeitintervall zwischen jedem aufeinanderfolgenden Bookletausstoß von der Booklet-Bindevorrichtung (10), und zum Steuern der Booklet-Stapeleinrichtung (100B) und des Antriebsmechanismus (M4,G4,142,143), derart, dass die Zeit, von dem Zeitpunkt, wenn der Transportmechanismus (140,141) den Transport eines auf der Booklet-Stapeleinrichtung (100B) gestapelten Booklets (S3) zu dem beweglichen Wagen (100C) startet, bis zu dem Zeitpunkt, wenn der Transportmechanismus (140,141) den Transport abschließt, kürzer ist als die Zeit, die der Fördermechanismus (112,113,116,117) in der vorbestimmten Position in Wartestellung ist.

3. Die Booklet-Stapelvorrichtung (100) gemäß Anspruch 1,
wobei der Antriebsmechanismus (M4,G4,142,143) einen Mechanismus (M4,G4) zum Antreiben des Transportmechanismus (140,141) umfasst.

4. Eine Booklet-Stapelvorrichtung (100) mit:
einem Booklet-Stapelvorrichtungskörper mit:
einer Booklet-Aufnahmeeinrichtung (100A) zum Aufnehmen eines Booklets (S3), das durch eine Booklet-Bindevorrichtung (10) gebunden ist, in einer Booklet-Aufnahmeposition,
einer Booklet-Stapeleinrichtung (100B), die mehrere Booklets (S3), welche von der Booklet-Aufnahmeeinrichtung (100A) empfangen wurden, stapeln kann und einen Transportmechanismus (140,141) aufweist, der das Booklet (S3) transportieren kann,
wobei die Booklet-Aufnahmeeinrichtung (100A) aufweist:
einen Aufnahmemechanismus (130,131,137,138) zum Transportieren des Booklets (S3), das in der Booklet-Aufnahmeposition aufgenommen wurde, zu einer vorbestimmten Position, und einen Liefermechanismus (112,113,116,117) zum Transportieren des Booklets (S3), welches zu der vorbestimmten Position transportiert worden ist, nach unten von der vorbestimmten Position, um das Booklet an die Booklet-Stapeleinrichtung (100B) zu übergeben, und zum Zurückkehren zu der vorbestimmten Position, wobei die Booklet-Stapeleinrichtung (100B) **dadurch gekennzeichnet ist, dass** sie ferner umfasst:
einem Antriebsmechanismus (M4,G4,142,143),
einem beweglichen Wagen (100C), der an dem Booklet-Stapelvorrichtungskörper angebracht und von diesem gelöst werden kann und der eine Booklet-Fördereinrichtung (150) zum Aufnehmen des auf der Booklet-Stapeleinrichtung (100B) gestapelten Booklets (S3) von dem Transportmechanismus (140,141) aufweist,
wobei die Booklet-Fördereinrichtung (150) durch den Antriebsmechanismus (M4,G4,142,143) angetrieben ist.

5. Die Booklet-Stapelvorrichtung (100) gemäß Anspruch 4, ferner mit:
einer Steuereinrichtung (200) zum Steuern der Booklet-Aufnahmeeinrichtung (100A), derart, dass die Zeit, von dem Zeitpunkt, wenn der Aufnahmemechanismus (130,131,137,138) beginnt, ein Booklet aufzunehmen, bis zu dem Zeitpunkt, wenn der Fördermechanismus (112, 113, 116, 117) zu der vorbestimmten Position zurückkehrt, kürzer ist als ein vorbestimmtes Zeitintervall zwischen jedem aufeinanderfolgenden Bookletausstoß von der Booklet-Bindevorrichtung (10), und zum Steuern der Booklet-Stapeleinrichtung (100B) und des Antriebsmechanismus (M4,G4,142,143), derart, dass die Zeit, von dem Zeitpunkt, wenn der Transportmechanismus (140,141) den Transport eines auf der Booklet-Stapeleinrichtung (100B) gestapelten Booklets (S3) zu dem beweglichen Wagen (100C) startet, bis zu dem Zeitpunkt, wenn der Transportmechanismus (140,141) den Transport abschließt, kürzer ist als die Zeit, die der Fördermechanismus (112,113,116,117) in der vorbestimmten Position in Wartestellung ist.

6. Die Booklet-Stapelvorrichtung (100) gemäß Anspruch 4,
wobei der Antriebsmechanismus (M4,G4,142,143) einen Mechanismus (M4,G4) zum Antreiben des Transportmechanismus (140,141) umfasst.

## Revendications

1. Appareil d'empilage de brochures ou de livrets (100) comprenant :
un dispositif de réception de brochure (100A) pour recevoir une brochure (S3) reliée par un appareil de reliure de brochure (10) à une position de réception de brochure ;
un dispositif d'empilage de brochures (100B) qui est capable d'empiler une pluralité de brochures (S3) reçues par le dispositif de réception de brochure (100A) et qui comprend un mécanisme de transport (140, 141) capable de transporter la brochure (S3);
dans lequel le dispositif de réception de brochure (100A) comprend un mécanisme de réception (130, 131, 137, 138) pour transporter la brochure (S3) reçue à la position de réception de brochure à une position prédéterminée ; et
un mécanisme de distribution (112, 113, 116, 117) pour transporter la brochure (S3) qui a été transportée à la position prédéterminée, vers le bas à partir de la position prédéterminée, pour transmettre la brochure au dispositif d'empilage de brochures (100B), et pour retourner à la position prédéterminée, et **caractérisé en ce qu'**il comprend en outre :
un mécanisme d'entraînement (M4, G4, 142, 143) pour entraîner un dispositif de transport de brochure (150) pour recevoir la brochure (S3) empilée sur le dispositif d'empilage de brochures (100B) du mécanisme de transport (140, 141), lorsqu'un chariot mobile (100C) qui peut être attaché au dispositif d'empilage de brochures (100) et détaché de celui-ci et qui comprend le dispositif de transport de brochure (150) est attaché au dispositif d'empilage de brochures (100).

2. Appareil d'empilage de brochures ou de livrets (100) selon la revendication 1, comprenant en outre :
un dispositif de commande (200) pour commander le dispositif de réception de brochure (100A) de sorte que le temps de l'instant auquel le mécanisme de réception (130, 131, 137, 138) commence à recevoir une brochure jusqu'à l'instant auquel le mécanisme de distribution (112, 113, 116, 117) retourne à la position prédéterminée soit plus court qu'un intervalle de temps prédéterminé entre chaque éjection de brochure consécutive de l'appareil de reliure de brochure (10), et pour commander le dispositif d'empilage de brochures (100B) et le mécanisme d'entraînement (M4, G4, 142, 143) de sorte que le temps de l'instant auquel le mécanisme de transport (140, 141) commence le transport d'une brochure (S3) empilée sur le dispositif d'empilage de brochures (100B) vers le chariot mobile (100C) jusqu'à l'instant auquel le mécanisme de transport (140, 141) termine le transport soit plus court que le temps pendant lequel le mécanisme de distribution (112, 113, 116, 117) est en attente à la position prédéterminée.

3. Appareil d'empilage de brochures ou de livrets (100) selon la revendication 1,
dans lequel le mécanisme d'entraînement (M4, G4, 142, 143) comprend un mécanisme (M4, G4) pour entraîner le mécanisme de transport (140, 141).

4. Appareil d'empilage de brochures ou de livrets (100) comprenant :
un corps d'appareil d'empilage de brochures ou de livrets comprenant :
un dispositif de réception de brochure (100A) pour recevoir une brochure (S3) reliée par un appareil de reliure de brochure (10) à une position de réception de brochure ;
un dispositif d'empilage de brochures (100) qui est capable d'empiler une pluralité de brochures (S3) reçues par le dispositif de réception de brochure (100A) et qui comporte un mécanisme de transport (140, 141) capable de transporter la brochure (S3) ;
dans lequel le dispositif de réception de brochure comporte :
un mécanisme de réception (130, 131, 137, 138) pour transporter la brochure (S3) reçue à la position de réception de brochure à une position prédéterminée ; et un mécanisme de distribution (112, 113, 116, 117) pour transporter la brochure (S3) qui a été transportée à la position prédéterminée, vers le bas à partir de la position prédéterminée, pour transmettre la brochure (S3) au dispositif d'empilage de brochures (100B), et pour retourner à la position prédéterminée, l'appareil d'empilage de brochures ou de livrets (100) étant **caractérisé en ce qu'**il comprend en outre :
un mécanisme d'entraînement (M4, G4, 142, 143) ;
un chariot mobile (100C) qui peut être attaché au corps d'appareil d'empilage de brochures ou de livrets et détaché de celui-ci, et qui comprend un dispositif de transport de brochure (150) pour recevoir la brochure (S3) empilée sur le dispositif d'empilage de brochures (100B) du mécanisme de transport (140, 141),
dans lequel le dispositif de transport de brochure (150) est entraîné par le mécanisme d'entraînement (M4, G4, 142, 143).

5. Appareil d'empilage de brochures ou de livrets (100) selon la revendication 4, comprenant en outre :
un dispositif de commande (200) pour commander le dispositif de réception de brochure (100A) de sorte que le temps de l'instant auquel le mécanisme de réception (130, 131, 137, 138) commence à recevoir une brochure (S3) jusqu'à l'instant auquel le mécanisme de distribution (112, 113, 116, 117) retourne à la position prédéterminée soit plus court qu'un intervalle de temps prédéterminé entre chaque éjection de brochure consécutive de l'appareil de reliure de brochure (10), et pour commander le dispositif d'empilage de brochures (100B) et le mécanisme d'entraînement (M4, G4, 142, 143) de sorte que le temps de l'instant auquel le mécanisme de transport (140, 141) commence le transport d'une brochure (S3) empilée sur le dispositif d'empilage de brochures (100B) vers le chariot mobile (100C) jusqu'à l'instant auquel le mécanisme de transport (140, 141) termine le transport soit plus court que le temps pendant lequel le mécanisme de distribution (112, 113, 116, 117) est en attente à la position prédéterminée.

6. Appareil d'empilage de brochures ou de livrets (100) selon la revendication 4,
dans lequel le mécanisme d'entraînement (M4, G4, 142, 143) comprend un mécanisme (M4, G4) pour entraîner le mécanisme de transport (140, 141).
